# EUROPEAN PATENT SPECIFICATION

(11) **EP 3 156 174 B1**
(45) Date of publication and mention of the grant of the patent: **26.06.2019**
(21) Application number: 15195308.0
(22) Date of filing: 19.11.2015
(51) Int. Cl.: B23Q 1/58, B23Q 1/38

(54) **FEEDING MODULE**
FÜHRUNGSMODUL
MODULE DE GUIDAGE

(30) Priority: 14.10.2015 TW 104133761
(43) Date of publication of application: 19.04.2017
(73) Proprietor: Industrial Technology Research Institute, Chu-Tung, Hsinchu (TW)
(72) Inventor: Shang-Te, CHEN, Taichung City (TW); Chin-Ming, CHEN, Taichung City (TW); Chiu-Hung, LI, Taichung City (TW); Hsin-Chuan, SU, Yunlin County (TW)
(74) Representative: Pons

(56) References cited:
- GB-A- 1 296 084
- JP-A- 2002 106 562
- US-A- 4 506 935

## Description

### Technical Field

The disclosure relates to a feeding module, more particularly to a feeding module having sliding blocks.

### Background

A conventional machine apparatus, such as a lathe machine, a grinding machine or a milling machine, usually includes a machine tool, a guide rail, a shaft and a power assembly. The guide rail is movably disposed on the shaft. The machine tool, such as a drilling tool or a milling tool, is mounted on the guide rail or the shaft. The power assembly is able to drive the guide rail and the shaft to move relative to each other, thereby moving the machine tool relative to the guide rail or the shaft.

However, in the conventional machine apparatus, because the shaft is constrained by only one guide rail, the shaft is easily bent during the repeated feeding movements, thereby reducing the precision of the feeding movements and the machining quality of the workpiece.

In addition, in the conventional machine apparatus, a plural of sliding blocks are disposed between the guide rail and the shaft for reducing the friction generated therebetween. For purpose of supplying the working fluid (ex. oil) to the sliding blocks continuously and using the working fluid repeatedly, it is required to equip the conventional machine apparatus with an additional fluid collecting device for collecting the used working fluid, but the size of the machine will be increased, which is inconvenient to users.

Document US4506935 (SUZUKI) relates to a bar-type slide guiding apparatus with hydrostatic bearings. The preamble of claim 1 is based on this document.

### SUMMARY

The disclosure provides a feeding module to improve the precision of the feeding movements of the feeding module in prior art.

One embodiment of the disclosure provides a feeding module including a slider and a guider. The slider includes two sliding portions, a first connecting portion and four sliding blocks with hydrostatic bearing. Each sliding portion has a first through hole. The first connecting portion is connected to the sliding portions. Two of the sliding blocks are disposed in the first through hole in one of the sliding portions, another two of the sliding blocks are disposed in the first through hole in another one of the sliding portions. Each sliding blocks has a second through hole. The guider includes two cylindrical portions corresponding to the two sliding portions. One of the cylindrical portions penetrates through the second through holes in two of the sliding blocks. Another one of the cylindrical portions penetrates through the second through holes in another two of the sliding blocks.

According to the surveillance device of the disclosure, single cylindrical portion penetrates through two separated sliding blocks. In other words, each cylindrical portion is able to be constrained by two sliding blocks. Thus, the constraint applied on each cylindrical portion is sufficient for preventing the cylindrical portion from bending when a force is applied on the cylindrical portion. In this manner, the deformation of single cylindrical portion is reduced, and the precision of the feeding movements as well as the machining quality of the workpiece are improved.

In addition, because the oil inlets are communicated to the oil outlet for circulating the working fluid in a closed fluid-circulation system, the working fluid is able to be used repeatedly without equipping the feeding module with an additional fluid collecting device for collecting the used working fluid. Thus, scraps generated by friction between the cylindrical portion and the sliding block are also collected with the working fluid, thereby preventing the scraps from flowing onto the workpiece and interfering the machining of the workpiece.

### BRIEF DESCRIPTION OF THE DRAWINGS

The present invention will become better understood from the detailed description given hereinbelow and the accompanying drawings which are given by way of illustration only and thus are not limitative of the present invention and wherein:
FIG. 1 is a perspective view of feeding modules applied to a machine apparatus according to an embodiment of the disclosure;
FIG. 2A is a perspective view of one of the feeding modules shown in FIG. 1;
FIG. 2B is a cross-sectional view of the feeding module shown in FIG. 2A;
FIG. 2C is an exploded view of the feeding module shown in FIG. 2B;
FIG. 3 is a partially enlarged view of the feeding module shown in FIG. 2B;
FIG. 4A is a cross-sectional view along a line 4A-4A in FIG. 2A; and
FIG. 4B is a perspective view of one of sliding blocks according to the embodiment of the disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

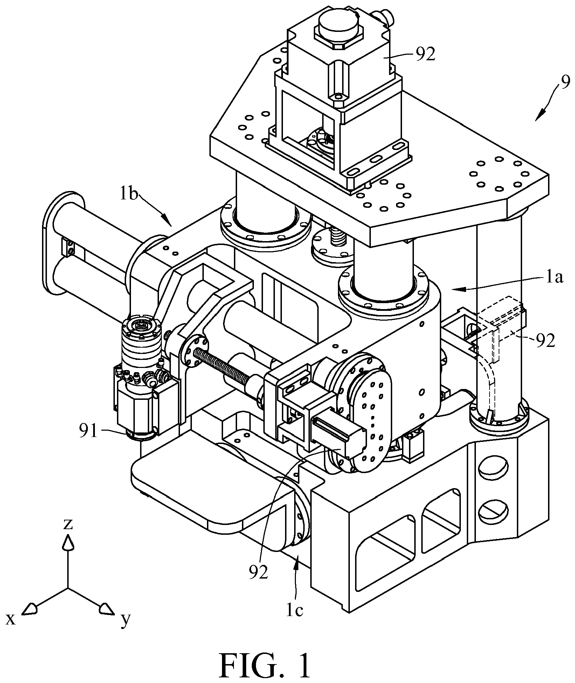

Please refer to FIG. 1, which is a perspective view of feeding modules applied to a machine apparatus according to an embodiment of the disclosure. As shown in FIG. 1, the present disclosure provides feeding modules 1a, 1b, 1c applied to a machine apparatus 9. The machine apparatus 9 is, for example, a lathe machine, a grinding machine or a milling machine which is able to shape the workpiece held thereby.

In this embodiment, the machine apparatus 9 is mounted with three feeding modules 1a, 1b, 1c, and each of the feeding modules 1a, 1b, 1c is able to provide a feeding movement in one specific direction. From the viewpoint of FIG. 1, a machine tool 91 mounted on the machine apparatus 9 is able to be moved in different directions (i.e. the Y-axis direction and the Z-axis direction) by the feeding modules 1a, 1b, 1c. The aforementioned machine tool 91 is, for example, a drilling tool or a milling tool. It is noted that the disclosure is not limited by the quantity of the feeding modules in the machine apparatus 9. In other embodiments, the machine apparatus 9 may have only one, two or over four feeding modules. A detailed structure of one of the feeding modules 1a, 1b, 1c will be described below.

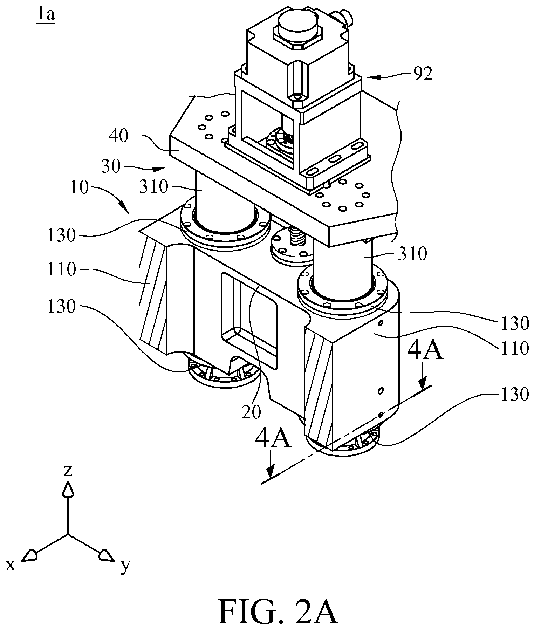

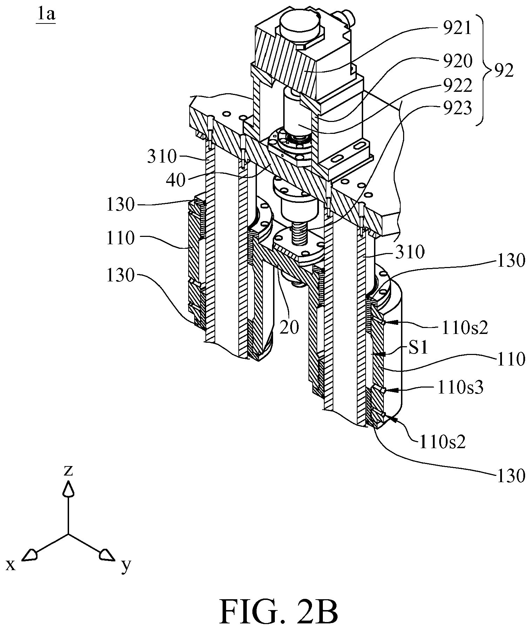

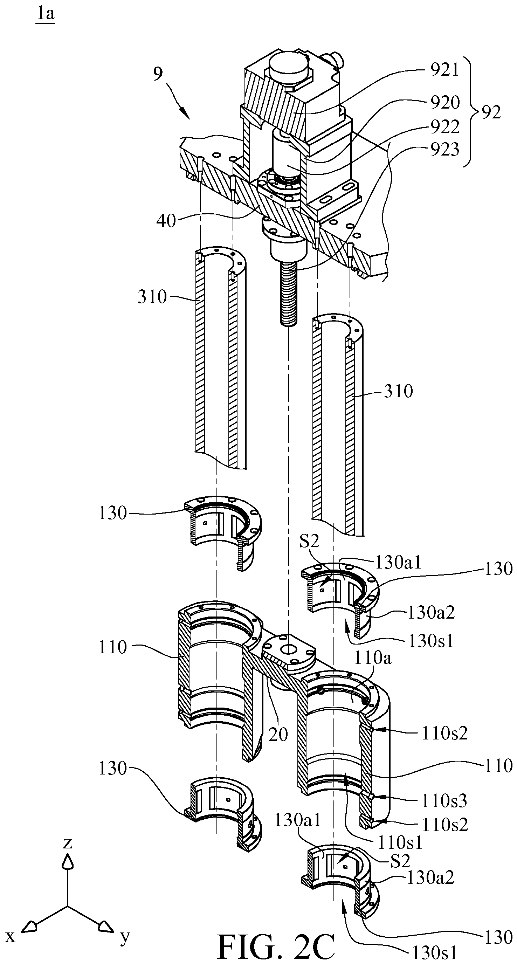

For purposes of clear illustration, the feeding module 1a is taken as an example in the following detailed description. Please refer to FIGS. 2A∼2C, FIG. 2A is a perspective view of one of the feeding modules shown in FIG. 1, FIG. 2B is a cross-sectional view of the feeding module shown in FIG. 2A, and FIG. 2C is an exploded view of the feeding module shown in FIG. 2B.

In this embodiment, the feeding module 1a includes a slider 10 and a guider 30. The slider 10 includes two sliding portions 110, a first connecting portion 20, and four sliding blocks 130 with hydrostatic bearing (hereinafter "sliding block 130"). The guider 30 includes two cylindrical portions 310. In addition, in this embodiment, the feeding module 1a further includes a second connecting portion 40 and a power assembly 92.

In details, the two sliding portions 110 are arranged side by side and spaced apart from each other. Each sliding portion 110 has a first through hole 110s1, a first inner surface 110a, two oil inlets 110s2 and an oil outlet 110s3. The first inner surface 110a surrounds and defines the first through hole 110s1, and the two oil inlets 110s2 and the oil outlet 110s3 are formed on the first inner surface 110a.

Each sliding block 130 is a cylinder-shaped sliding block. Two of the sliding blocks 130 are located opposite to each other and fixed in the first through hole 110s1 of one of the sliding portions 110. In addition, the two sliding blocks 130 are corresponding to the two oil inlets 110s2 of the sliding portion 110, respectively. Furthermore, each sliding block 130 has a second through hole 130s1 penetrating through itself and a second inner surface 130a1 defining the second through hole 130s1.

The first connecting portion 20 is connected to the two sliding portions 110 as a connection between the two sliding portions 110 of the slider 10. In this embodiment, the first connecting portion 20 and the two sliding portions 110 are integrated into a single unit, but the disclosure is not limited thereto. For example, in other embodiments, the first connecting portion 20 and the two sliding portions 110 are three independent objects and may be fixed to each other by an additional procedure.

The two cylindrical portions 310 are fixed to the second connecting portion 40 and penetrating through the two second through holes 130s1 of the two sliding blocks 130 of the sliding portion 110, respectively. Accordingly, each cylindrical portion 310 is equipped with two sliding blocks 130; thus, in the feeding module 1a, two cylindrical portions 310 are equipped with four sliding blocks 130. In some embodiments, each cylindrical portion can be equipped with more than two sliding blocks; thus, in the feeding module, two cylindrical portions are equipped with more than four sliding blocks.

The power assembly 92 includes a power assembly case 920, a motor 921, a mechanical linkage 922 and a threaded rod 923. The motor 921, the mechanical linkage 922 and the threaded rod 923 are mounted on the power assembly case 920. In detail, the power assembly case 920 is disposed on the second connecting portion 40, the motor 921 is able to drive the mechanical linkage 922 to rotate the threaded rod 923, and the threaded rod 923 movably penetrates through the first connecting portion 20. Thus, the first connecting portion 20 is able to be moved upward and downward by the rotation of the threaded rod 923. In other words, the power assembly 92 is able to drive the first connecting portion 20 to move the slider 10 relative to the second connecting portion 40.

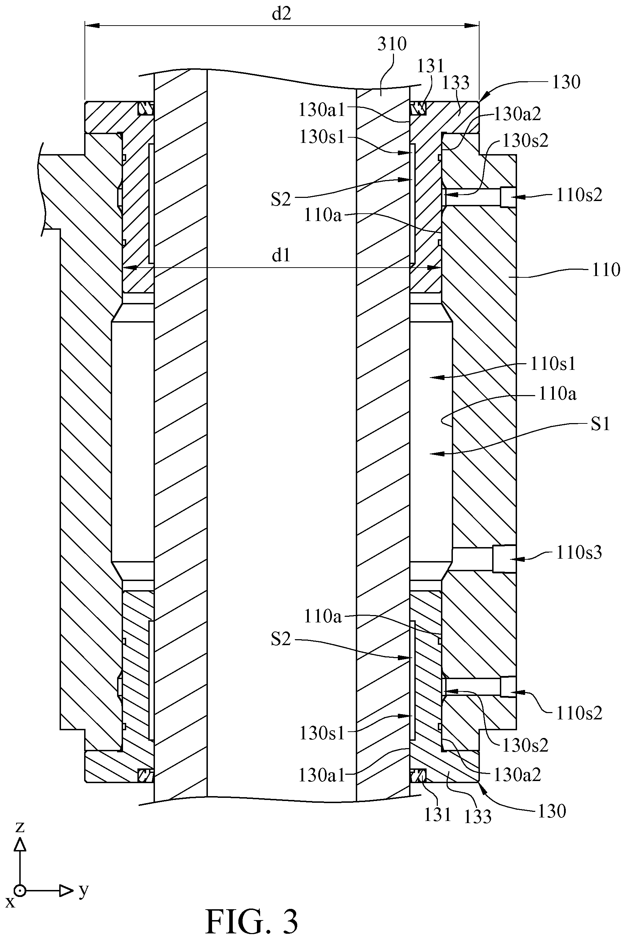

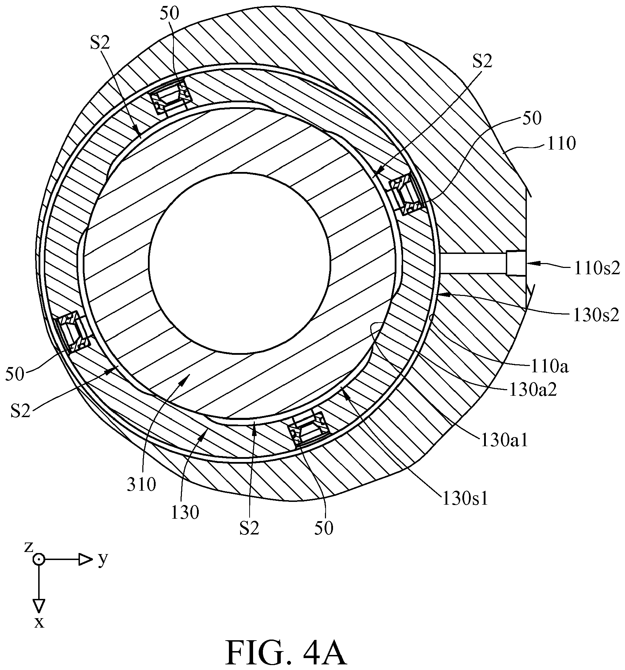

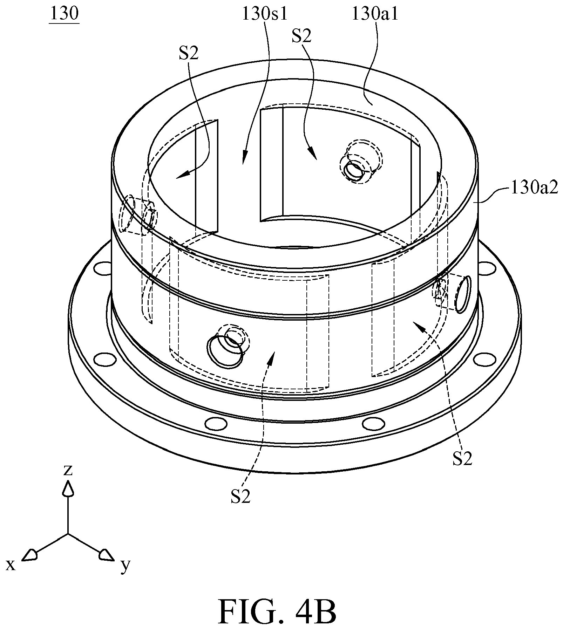

Then, a detailed description of the sliding portion 110, the sliding block 130 and the cylindrical portion 310 will be described below. Please refer to FIG. 3∼4B, FIG. 3 is a partially enlarged view of the feeding module shown in FIG. 2B, FIG. 4A is a cross-sectional view along a line 4A-4A in FIG. 2A, and FIG. 4B is a perspective view of one of sliding blocks according to the embodiment of the disclosure. For purposes of explanation, FIG. 3 only illustrates one cylindrical portion 310, one sliding portion 110 and two sliding blocks 130 which are arranged as a group.

In this embodiment, as shown in FIG. 3, the two sliding blocks 130 and the first inner surface 110a together define a liquid-storage space S1 located therebetween. The oil outlet 110s3 of the sliding portion 110 is communicated to the liquid-storage space S1. In addition, a side of one of the sliding blocks 130 which is opposite to the other sliding block 130 has an oil seal 131. In other words, the side of one of the sliding blocks 130 which is opposite to the liquid-storage space S1 has the oil seal 131.

Furthermore, as shown in FIG. 3-4A, each sliding block 130 has an outer surface 130a2 and four oil chambers S2. The outer surface 130a2 is opposite to the second inner surface 130a1, and the four oil chambers S2 are formed on the second inner surface 130a1. At least a part of the outer surface 130a2 and the first inner surface 110a of the sliding portion 110 together define an oil groove 130s2 therebetween.

Moreover, in this embodiment, as shown in FIG. 4A, each sliding block 130 is mounted with four restrictors 50 corresponding to the four oil chambers S2, respectively, and communicating the oil chambers S2 and the oil groove 130s2. In this embodiment, the feeding module 1a is equipped with an oil supply module (not shown) which is able to supply the working fluid to the sliding blocks 130. The working fluid is, for example, oil.

In this embodiment, the sliding blocks 130 are hydrostatic sliding blocks. The so-called hydrostatic sliding block is a sliding block having oil chamber or oil groove for storing lubricating oil. When the sliding block slides relative to the cylindrical portion, an oil film is formed between the sliding block and the cylindrical portion for providing hydrostatic bearing, so that the friction between the sliding block and the cylindrical portion is significantly decreased. In addition, the aforementioned restrictor 50 is used for regulating the pressure of the working fluid in the sliding blocks 130, and the restrictor 50 is, for example, a membrane-type restrictor, a capillary restrictor or an orifice-type restrictor.

In detail, during the feeding movement, the oil supply module feeds the working fluid to the feeding module 1a from the oil inlets 110s2, and then the working fluid sequentially passes through the oil groove 130s2, the restrictors 50 and the oil chamber S2. In the meanwhile, the oil film is formed between the oil chambers S2 of the sliding block 130 and the cylindrical portion 310. In such a case, because the oil seals 131, the working fluid is not flowing to anywhere but to the liquid-storage space S1 and then the oil outlet 110s3. Thus, the working fluid flowing into the feeding module 1a from the oil inlets 110s2 is allowed to pass through the oil groove 130s2, the restrictors 50, and the oil chambers S2, the liquid-storage space S1 to the oil outlet 110s3 and then back to the oil supply module to form a circulating loop. Hence, the working fluid is able to be circulated in a closed fluid-circulation system and isolated from the external environment for preventing the scraps, which are generated by friction between the cylindrical portion and the sliding block and also collected by the working fluid, from flowing onto the workpiece and interfering the machining of the workpiece. Accordingly, there is no need to equip the machine apparatus 9 with a fluid collecting device for collecting the working fluid so that the size of the machine apparatus 9 is relatively smaller than the conventional machine apparatus.

In this embodiment, as seen in the FIG. 3, the liquid-storage space S1 has a relatively large room than the oil groove 130s2 and the oil chambers S2 for accommodating the working fluid, which is able to buffer the flow of the working fluid. Thus, during the feeding movement, the scraps generated by the friction between the sliding blocks 130 and the cylindrical portions 310 is temporarily gathered in the liquid-storage space S1 with the flow of the working fluid, and then the scraps gathered in the liquid-storage space S1 are discharged with the working fluid via the oil outlet 110s3. Hence, the fluid circulation path is not easy to be blocked by the scraps.

In addition, because the oil film is formed between the oil chambers S2 of the sliding blocks 130 and the cylindrical portion 310, the friction between the sliding blocks 130 and the cylindrical portion 310 is able to be reduced. Moreover, in this embodiment, because each sliding block 130 has the first through hole 110s1 with a circular shape, the sliding blocks 130 are able to surround the cylindrical portion 310 in 360 degrees for providing the hydrostatic pressure to uniformly covering all radial directions of the cylindrical portion 310. But the disclosure is not limited to the shape of the sliding block 130. In fact, any configuration of the sliding block which is able to surround the cylindrical portion 310 in 360 degrees falls within the scope of the disclosure. For example, the sliding block 130 is a polygon-cylinder-shaped sliding block.

In the conventional machine apparatus, the cylindrical portion of the conventional machine apparatus is surrounded by plural sliding blocks. However, in the present disclosure, one sliding block 130 with the cylinder-shaped second through hole 130s1 surrounds the cylindrical portion 310 in 360 degrees. Therefore, it is obvious that the sliding blocks 130 are able to position the cylindrical portion 310 more precisely. In addition, the cylinder-shaped sliding block 130 has greater structural strength, which is able to improve the durability of the feeding module 1a.

Furthermore, when manufacturing the sliding block 130, the cylinder-shaped second through hole 130s1 is formed in a long sliding block, and then the long sliding block is cut into the desired size which is the size of the sliding block 130. Thus, the second through holes 130s1 of the two sliding blocks 130 extend along the same axis, which is able to improve the precision of the feeding movement and reduce the vibration of the machine tool 91, thereby improving the quality of the workpiece and prolonging the lifespan of the machine tool.

Moreover, in the disclosure, single cylindrical portion 310 penetrates through two separated sliding blocks 130. In other words, each cylindrical portion 310 is able to be constrained by two sliding blocks 130. Thus, the constraint applied on each cylindrical portion 310 is sufficient for preventing the cylindrical portion from bent when a force is applied on the cylindrical portion, which means that the bend resistance of the cylindrical portion 310 is improved. In this manner, the deformation of single cylindrical portion 310 is reduced, and the precision of the feeding movement is improved. Accordingly, the machine apparatus 9 has high precision by mounting the feeding module 1a thereto.

Then, please refer back to FIG. 3, each sliding block 130 further has an annular flange 133. An outside diameter d2 of the annular flange 133 is greater than an inside diameter d1 of the first through hole 110s1. The sliding block 130 is fixed to the sliding portion 110 via the annular flange 133 for preventing the fixing structures (e.g. screw holes) on the sliding block from interfering the arrangement of the oil chambers S2 on the sliding blocks 130.

In addition, the quantity of the oil chambers S2 in each sliding block 130 is able to be altered according to actual requirement. For example, each sliding block 130 has three or over five oil chambers S2.

Moreover, as stated in the above description, the power assembly 92 moves the sliding portions 110 through the first connecting portion 20. In such a case, the sliding portion 110 is moving but the cylindrical portion 310 is not moving during the feeding movement. However, the disclosure is not limited thereto; please see the feeding module 1b shown in FIG. 1, the sliding portion is not moving but the cylindrical portion is moving during the feeding movement.

Furthermore, any type of the power source which is able to drive the slider 10 and the cylindrical portions 310 to move relative to each other falls within the scope of the disclosure.

According to the feeding module discussed above, single cylindrical portion penetrates through two separated sliding blocks. In other words, each cylindrical portion is able to be constrained by two sliding blocks. Thus, the constraint applied on each cylindrical portion is sufficient for preventing the cylindrical portion from bending when a force is applied on the cylindrical portion. In this manner, the deformation of single cylindrical portion is reduced, and the precision of the feeding movements as well as the machining quality of the workpiece are improved.

In addition, because the oil inlets are communicated to the oil outlet for circulating the working fluid in a closed fluid-circulation system, the working fluid is able to be used repeatedly without equipping the feeding module with an additional fluid collecting device for collecting the used working fluid. Thus, scraps generated by friction between the cylindrical portion and the sliding block are also collected with the working fluid, thereby preventing the scraps from flowing onto the workpiece and interfering the machining of the workpiece.

Moreover, in the aforementioned fluid circulation, the liquid-storage space has a relatively large room for accommodating the working fluid, which is able to buffer the flow of the working fluid. Thus, during the feeding movement, the scraps generated by the friction between the sliding blocks and the cylindrical portion is temporarily gathered in the liquid-storage space with the flow of the working fluid, and then the scraps gathered in the liquid-storage space are discharged with the working fluid via the oil outlet. Hence, the fluid circulation is not easy to be blocked by the scraps.

## Claims

1. A feeding module (1a, 1b, 1c), comprising:
a slider (10), comprising:
two sliding portions (110), each of them having a first through hole (110s1);
a first connecting portion (20), connected to the two sliding portions (110); and
four sliding blocks (130) with hydrostatic bearing, two of the sliding blocks (130) disposed in the first through hole (110s1) in one of the two sliding portions (110), another two of the sliding blocks (130) disposed in the first through hole (110s1) in another one of the two sliding portions (110), and each of the four sliding blocks (130) having a second through hole (130s1); and
a guider (30), comprising two cylindrical portions (310) corresponding to the two sliding portions (110), one of the cylindrical portions (310) penetrating through the second through holes (130s1) in two of the sliding blocks (130), and another one of the cylindrical portions (310) penetrating through the second through holes (130s1) in another two of the sliding blocks (130) wherein each of the two sliding portions (110) further has a first inner surface (110a), two oil inlets (110s2) and at least one oil outlet (110s3), the first inner surface (110a) surrounds and defines the first through hole (110s1), the two oil inlets (110s2) and at least one oil outlet (110s3) are communicated to the first through hole (110s1), and the two oil inlets (110s2) are communicated to the at least one oil outlet (110s3);
**characterized in that**, in each of the sliding portions (110), the two sliding blocks (130) and the first inner surface (110a) together define a liquid-storage space (S1) located therebetween, and the at least one oil outlet (110s3) is communicated to the liquid-storage space (S1).

2. The feeding module (1a, 1b, 1c) according to claim 1, further comprising a second connecting portion (40) connected to the two cylindrical portions (310), and the second connecting portion (40) allowing the two sliding portions (110) to be moved relative to the two cylindrical portions (310) together.

3. The feeding module (1a, 1b, 1c) according to claim 1, wherein, in each of the sliding portions (110), a side of one of the sliding blocks (130) which is opposite to another one of the sliding blocks (130) has an oil seal (131).

4. The feeding module (1a, 1b, 1c) according to claim 1, wherein each of the sliding blocks (130) has a second inner surface (130a1) and a plurality of oil chambers (S2), the second inner surface (130a1) surrounds and defines the second through hole (130s1), the plurality of oil chambers (S2) are formed on the second inner surface (130a1), and each of the plurality of oil chambers (S2) is communicated to one of the two oil inlets (110s2).

5. The feeding module (1a, 1b, 1c) according to claim 4, wherein each of the sliding blocks (130) further has an outer surface (130a2) opposite to the second inner surface (130a1), at least a part of the outer surface (130a2) and the first inner surface (110a) of the sliding portion (110) together define an oil groove (130s2), and the oil groove (130s2) communicates one of the oil inlets (110s2) and the plurality of oil chambers (S2).

6. The feeding module (1a, 1b, 1c) according to claim 5, further comprising a plurality of restrictors (50) disposed on the sliding blocks (130) and communicated to the oil groove (130s2) and the plurality of oil chambers (S2).

7. The feeding module (1a, 1b, 1c) according to claim 6, wherein the quantity of the plurality of oil chambers (S2) formed on each of the sliding blocks (130) is four, and the quantity of the plurality of restrictors (50) disposed on each of the sliding blocks (130) is four.

8. The feeding module (1a, 1b, 1c) according to claim 1, further comprising a power assembly (92) connected to the first connecting portion (20) and the second connecting portion (40), the power assembly (92) allowing the first connecting portion (20) and the second connecting portion (40) to be moved relative to each other, and the second connecting portion (40) being used for connecting a machine tool (91).

9. The feeding module (1a, 1b, 1c) according to claim 1, further comprising a power assembly (92) connected to the first connecting portion (20) and the second connecting portion (40), allowing the first connecting portion (20) and the second connecting portion (40) to be moved relative to each other, and the first connecting portion (20) being used for connecting a machine tool (91).

10. The feeding module (1a, 1b, 1c) according to claim 1, wherein each of the sliding blocks (130) has an annular flange (133), and an outside diameter (d2) of the annular flange (133) is greater than an inside diameter (d1) of the first through hole (110s1).

## Patentansprüche

1. Zuführmodul (1a, 1b, 1c), Folgendes umfassend:
einen Schieber (10), Folgendes umfassend:
zwei Gleitabschnitte (110), von denen jeder ein erstes Durchgangsloch (110s1) aufweist;
einen ersten Verbindungsabschnitt (20), der mit den beiden Gleitabschnitten (110) verbunden ist; und
vier Gleitschuhe (130) mit hydrostatischem Lager, wobei zwei der Gleitschuhe (130) in dem ersten Durchgangsloch (110s1) in einem der beiden Gleitabschnitte (110) angeordnet sind, wobei zwei weitere Gleitschuhe (130) in dem ersten Durchgangsloch (110s1) in einem anderen der beiden Gleitabschnitte (110) angeordnet sind, und jeder der vier Gleitschuhe (130) ein zweites Durchgangsloch (130s1) aufweist; und
eine Führung (30), umfassend zwei zylindrische Abschnitte (310), die den beiden Gleitabschnitten (110) entsprechen, wobei einer der zylindrischen Abschnitte (310) durch die zweiten Durchgangslöcher (130s1) in zwei der Gleitschuhe (130) eindringt, und ein anderer der zylindrischen Abschnitte (310) durch die zweiten Durchgangslöcher (130s1) in zwei weiteren der Gleitschuhe (130) eindringt,
wobei jeder der beiden Gleitabschnitte (110) ferner eine erste Innenfläche (110a), zwei Öleinlässe (110s2) und mindestens einen Ölauslass (110s3) aufweist, wobei die erste Innenfläche (110a) das erste Durchgangsloch (110s1) umgibt und definiert, die beiden Öleinlässe (110s2) und mindestens ein Ölauslass (110s3) mit dem ersten Durchgangsloch (110s1) in Verbindung gesetzt werden, und die beiden Öleinlässe (110s2) mit dem mindestens einen Ölauslass (110s3) in Verbindung gesetzt werden;
**dadurch gekennzeichnet, dass** in jedem der Gleitabschnitte (110) die beiden Gleitblöcke (130) und die erste Innenfläche (110a) zusammen einen dazwischen liegenden Flüssigkeitsspeicherraum (S1) definieren und der mindestens eine Ölauslass (110s3) mit dem Flüssigkeitsspeicherraum (S1) verbunden ist.

2. Zuführmodul (1a, 1b, 1c) nach Anspruch 1, ferner umfassend einen zweiten Verbindungsabschnitt (40), der mit den beiden zylindrischen Abschnitten (310) verbunden ist, und wobei der zweite Verbindungsabschnitt (40) es ermöglicht, die beiden Gleitabschnitte (110) relativ zu den beiden zylindrischen Abschnitten (310) zusammen zu bewegen.

3. Zuführmodul (1a, 1b, 1c) nach Anspruch 1, wobei, in jedem der Gleitabschnitte (110), eine Seite eines der Gleitblöcke (130), die einem anderen der Gleitblöcke (130) gegenüberliegt, eine Öldichtung (131) aufweist.

4. Zuführmodul (1a, 1b, 1c) nach Anspruch 1, wobei jeder der Gleitblöcke (130) eine zweite Innenfläche (130a1) und eine Vielzahl von Ölkammern (S2) aufweist, die zweite Innenfläche (130a1) das zweite Durchgangsloch (130s1) umgibt und definiert, die Vielzahl von Ölkammern (S2) auf der zweiten Innenfläche (130a1) ausgebildet ist und jede der Vielzahl von Ölkammern (S2) mit einem der beiden Öleinlässe (110s2) in Verbindung gesetzt wird.

5. Zuführmodul (1a, 1b, 1c) nach Anspruch 4, wobei jeder der Gleitblöcke (130) ferner eine der zweiten Innenfläche (130a1) gegenüberliegende Außenfläche (130a2) aufweist, mindestens ein Teil der Außenfläche (130a2) und der erste Innenfläche (110a) des Gleitabschnitts (110) zusammen eine Ölnut (130s2) definieren, und die Ölnut (130s2) einen der Öleinlässe (110s2) und die Vielzahl von Ölkammern (S2) verbindet.

6. Zuführmodul (1a, 1b, 1c) nach Anspruch 5, ferner umfassend eine Vielzahl von Drosseln (50), die auf den Gleitblöcken (130) angeordnet sind und mit der Ölnut (130s2) und der Vielzahl von Ölkammern (S2) in Verbindung gesetzt werden.

7. Zuführmodul (1a, 1b, 1c) nach Anspruch 6, wobei die Menge der Vielzahl von Ölkammern (S2), die auf jedem der Gleitblöcke (130) ausgebildet sind, vier ist, und die Menge der Vielzahl von Drosseln (50), die auf jedem der Gleitblöcke (130) angeordnet sind, vier ist.

8. Zuführmodul (1a, 1b, 1c) nach Anspruch 1, ferner umfassend eine Leistungsanordnung (92), die mit dem ersten Verbindungsabschnitt (20) und dem zweiten Verbindungsabschnitt (40) verbunden ist, wobei die Leistungsanordnung (92) es ermöglicht, den ersten Verbindungsabschnitt (20) und den zweiten Verbindungsabschnitt (40) relativ zueinander zu bewegen, und wobei der zweite Verbindungsabschnitt (40) zum Verbinden einer Werkzeugmaschine (91) verwendet wird.

9. Zuführmodul (1a, 1b, 1c) nach Anspruch 1, ferner umfassend eine Leistungsanordnung (92), die mit dem ersten Verbindungsabschnitt (20) und dem zweiten Verbindungsabschnitt (40) verbunden ist, wodurch es ermöglicht wird, den ersten Verbindungsabschnitt (20) und den zweiten Verbindungsabschnitt (40) relativ zueinander zu bewegen, und wobei der erste Verbindungsabschnitt (20) zum Verbinden einer Werkzeugmaschine (91) verwendet wird.

10. Zuführmodul (1a, 1b, 1c) nach Anspruch 1, wobei jeder der Gleitblöcke (130) einen Ringflansch (133) aufweist und ein Außendurchmesser (d2) des Ringflansches (133) größer ist als ein Innendurchmesser (d1) des ersten Durchgangslochs (110s1).

## Revendications

1. Module d'alimentation (1a, 1b, 1c), comprenant :
une glissière (10), comprenant :
deux portions coulissantes (110), chacune d'elles ayant un premier orifice traversant (110s1) ;
une première portion de raccordement (20), raccordée aux deux portions coulissantes (110) ; et
quatre blocs coulissants (130) avec un palier hydrostatique, deux des blocs coulissants (130) disposés dans le premier orifice traversant (110s1) dans l'une des deux portions coulissantes (110), deux autres des blocs coulissants (130) disposés dans le premier orifice traversant (110s1) dans une autre des deux portions coulissantes (110), et chacun des quatre blocs coulissants (130) ayant un deuxième orifice traversant (130s1) ; et
un guide (30), comprenant deux portions cylindriques (310) correspondant aux deux portions coulissantes (110), l'une des portions cylindriques (310) pénétrant à travers les deuxièmes orifices traversants (130s1) dans deux des blocs coulissants (130), et une autre des portions cylindriques (310) pénétrant à travers les deuxièmes orifices traversants (130s1) dans deux autres des blocs coulissants (130)
dans lequel chacune des deux portions coulissantes (110) a en outre une première surface interne (110a), deux entrées d'huile (110s2) et au moins une sortie d'huile (110s3), la première surface interne (110a) entoure et définit le premier orifice traversant (110s1), les deux entrées d'huile (110s2) et au moins une sortie d'huile (110s3) sont communiquées au premier orifice traversant (110s1), et les deux entrées d'huile (110s2) sont communiquées à la au moins une sortie d'huile (110s3) ;
**caractérisé en ce que**, dans chacune des portions coulissantes (110), les deux blocs coulissants (130) et la première surface interne (110a) définissent ensemble un espace de stockage de liquide (S1) situé au milieu, et la au moins une sortie d'huile (110s3) est communiquée à l'espace de stockage de liquide (S1).

2. Module d'alimentation (1a, 1b, 1c) selon la revendication 1, comprenant en outre une deuxième portion de raccordement (40) raccordée aux deux portions cylindriques (310), et la deuxième portion de raccordement (40) permettant aux deux portions coulissantes (110) d'être déplacées par rapport aux deux portions cylindriques (310) ensemble.

3. Module d'alimentation (1 a, 1b, 1c) selon la revendication 1, dans lequel, dans chacune des portions coulissantes (110), un côté de l'un des blocs coulissants (130) qui est en regard d'un autre des blocs coulissants (130) a un joint d'huile (131).

4. Module d'alimentation (1a, 1b, 1c) selon la revendication 1, dans lequel chacun des blocs coulissants (130) a une deuxième surface interne (130a1) et une pluralité de chambres à huile (S2), la deuxième surface interne (130a1) entoure et définit le deuxième orifice traversant (130s1), la pluralité de chambres à huile (S2) sont formées sur la deuxième surface interne (130a1), et chacune de la pluralité de chambres à huile (S2) est communiquée à l'une des deux entrées d'huile (110s2).

5. Module d'alimentation (1a, 1b, 1c) selon la revendication 4, dans lequel chacun des blocs coulissants (130) a en outre une surface externe (130a2) en regard de la deuxième surface interne (130a1), au moins une partie de la surface externe (130a2) et la première surface interne (110a) de la portion coulissante (110) définissent ensemble une rainure à huile (130s2), et la rainure à huile (130s2) communique l'une des entrées d'huile (110s2) et la pluralité de chambres à huile (S2).

6. Module d'alimentation (1a, 1b, 1c) selon la revendication 5, comprenant en outre une pluralité de restricteurs (50) disposés sur les blocs coulissants (130) et communiqués à la rainure à huile (130s2) et à la pluralité de chambres à huile (S2).

7. Module d'alimentation (1a, 1b, 1c) selon la revendication 6, dans lequel la quantité de la pluralité de chambres à huile (S2) formées sur chacun des blocs coulissants (130) est de quatre, et la quantité de la pluralité de restricteurs (50) disposés sur chacun des blocs coulissants (130) est de quatre.

8. Module d'alimentation (1a, 1b, 1c) selon la revendication 1, comprenant en outre un ensemble de puissance (92) raccordé à la premier portion de raccordement (20) et à la deuxième portion de raccordement (40), l'ensemble de puissance (92) permettant à la première
portion de raccordement (20) et à la deuxième portion de raccordement (40) d'être déplacées l'une par rapport à l'autre, et la deuxième portion de raccordement (40) étant utilisée pour raccorder une machine-outil (91).

9. Module d'alimentation (1a, 1b, 1c) selon la revendication 1, comprenant en outre un ensemble de puissance (92) raccordé à la premier portion de raccordement (20) et à la deuxième portion de raccordement (40), permettant à la première portion de raccordement (20) et à la deuxième portion de raccordement (40) d'être déplacées l'une par rapport à l'autre, et la première portion de raccordement (20) étant utilisée pour raccorder une machine-outil (91).

10. Module d'alimentation (1a, 1b, 1c) selon la revendication 1, dans lequel chacun des blocs coulissants (130) a une bride annulaire (133), et un diamètre extérieur (d2) de la bride annulaire (133) est plus grand qu'un diamètre (d1) du premier orifice traversant (110s1).
